# EUROPÄISCHE PATENTANMELDUNG

(11) **EP 1 396 374 A1**
(43) Veröffentlichungstag der Anmeldung: **10.03.2004**
(21) Anmeldenummer: 02020136.4
(22) Anmeldetag: 09.09.2002
(51) Int. Cl.: B60K 37/06, B60K 35/00

(54) **Bedien- und Anzeigevorrichtung**

(71) Anmelder: Ford Global Technologies, Inc., A subsidiary of Ford Motor Company, Dearborn, Michigan 48126 (US)
(72) Erfinder: Schmitz, Stephan, 50672 Köln (DE)
(74) Vertreter: Drömer, Hans-Carsten, Dipl.-Ing.

(57) **Zusammenfassung**

Die Erfindung bezieht sich auf eine Bedien- und Anzeigevorrichtung 10 in Fahrzeugen, insb. in Kraftfahrzeugen, zur Auswahl eines Teilmenüs aus einem auf einer Anzeigevorrichtung 11 anzeigbaren Menü, umfassend eine Anzeigevorrichtung 11 und eine räumlich getrennt von der Anzeigevorrichtung 11 angeordnete Bedienvorrichtung 12, wobei die Bedienvorrichtung 12 separat von der Anzeigevorrichtung 11 betätigbar ausgebildet ist und wobei die Anzeigevorrichtung 11 zur frei wählbaren, ein- und ausschaltbaren Wiedergabe der Symbole und der Betätigungen der Bedienvorrichtung 11 ausgebildet ist. Es ist. dabei die Bedienvorrichtung 12 der erfindungsgemäßen Anordnung erfindungsgemäß als n-eckig ausgebildetes Touch- Pad 13 ausgebildet und die Anzeigevorrichtung 11 ist zur frei wählbaren, ein- und ausschaltbaren Wiedergabe dieses n- eckigen Touch- Pad 13, seiner Symbole und seiner Betätigungen ausgebildet.

## Beschreibung

Die Erfindung bezieht sich auf eine Bedien- und Anzeigevorrichtung in Fahrzeugen, insb. in Kraftfahrzeugen, zur Auswahl eines Teilmenüs aus einem auf einer Anzeigevorrichtung anzeigbaren Menü, umfassend eine Anzeigevorrichtung und eine räumlich getrennt von der Anzeigevorrichtung angeordnete Bedienvorrichtung, wobei die Bedienvorrichtung separat von der Anzeigevorrichtung betätigbar ausgebildet ist und wobei die Anzeigevorrichtung zur frei wählbaren, ein- und ausschaltbaren Wiedergabe der Symbole und der Betätigungen der Bedienvorrichtung ausgebildet ist.

Aus dem Stand der Technik sind verschiedene Bedien- und Anzeigevorrichtungen der gattungsgemäßen Art bekannt. So ist z.B. aus der DE 44 43 912 A1 eine Bedienvorrichtung in Kraftfahrzeugen zur Auswahl eines Teilmenüs aus einem Menü mittels eines Bildschirms mit im wesentlichen vertikaler Anzeigefläche bekannt, auf der den Teilmenüs zugeordnete Symbole angezeigt sind, bei der ein im wesentlichen flaches Bedienfeld dem Bildschirm zugeordnet ist. In dem Bedienfeld sind dabei Schaltkontakte angeordnet, die in ihrer Lage den Symbolen auf dem Bildschirm entsprechen und die bei Betätigen das Teilmenü auswählen. Es soll durch diese Anordnung die Bedienung des Bedienfeldes wesentlich vereinfacht werden, da aufgrund der räumlichen Zuordnung zwischen Bildschirminhalt und Lage des zugehörigen Schalters das Auffinden des gewünschten Teilmenüs ohne weiteres möglich ist. Diese Information kann ohne dauernde Betrachtung des Bildschirmes erhalten werden, wobei es hierbei durch die räumliche Trennung von Bildschirm und Bedienfläche möglich ist, beide an geeigneter Stelle anzuordnen, d.h. den Bildschirm im Blickfeld und das Bedienfeld im Griffbereich des Fahrzeugbenutzers. Nachteilig ist bei dieser Anordnung zum einen der für ihre Realisierung erforderliche hohe Fertigungsaufwand, weiterhin nachteilig ist, daß die Anzeigefläche ausschließlich der Anzeige der den Teilmenüs zugeordneten Symbolen dient, d.h. für die anderen Fahrfunktionsanzeigen sind weitere Anzeigeflächen erforderlich. Bei einer Weiterbildung dieser Anordnung ist nach der DE 196 05 427 A1 außerdem vorgesehen, daß dem Bedienfeld eine Wiedergabeeinrichtung zugeordnet ist, die einen aufliegenden Gegenstand auf dem Bildschirm abbildet. Die Wiedergabeeinrichtung kann dabei eine optische Abbildung des Bedienfeldes auf dem Bildschirm sein, wobei die optische Abbildung z.B. mittels einer Kamera oder mittels Umlenkspiegeln erfolgen kann. Durch diese Ausbildung soll die Auswahl der Teilmenüs noch weiter unterstützt werden. Es ergeben sich aber auch hier die zuvor erwähnten Nachteile, wobei hier der fertigungstechnische Aufwand im Vergleich zu der anderen Lösung noch erhöht ist.

Weiterhin ist aus der US 5 539 429 A eine Bedieneinrichtung mit einem Berührungsfeld für ein Fahrzeug bekannt, bei der in einer Anzeigeeinheit mit einem Bildschirm, der die gewünschten Informationen wiedergibt, über einen Schalter eine Anzeigeleiste auf dem Bildschirm eingeblendet werden kann, über die z.B. ein vorbestimmter Kontrollvorgang mittels Annäherung z.B. der Finger der Bedienperson ausgelöst werden kann. Um die Anzeigeleiste nach einer bestimmten Zeit wieder von dem Bildschirm zu entfernen, ist ein Löschungssignal erforderlich, das z.B. durch Aktivierung einer Zeitschaltuhr od. dgl. ausgelöst werden kann. Wenn hier die Anzeigeleiste entfernt worden ist, wird die gesamte Bildschirmfläche wieder für die Informationsanzeige zur Verfügung stehen, ohne von der Anzeigeleiste teilweise abgedeckt zu werden. Nachteilig bei dieser Anordnung ist insb. das Fehlen einer separat zu betätigenden Bedienvorrichtung, d.h. der Bildschirm muß in der Nähe der Bedienperson sein, was zu den bekannten Problemen bzgl. der Unterbringung sowie auch der ggfs. zu erwartenden Ablenkung des Fahrzeugbenutzers führt.

Ausgehend von diesen bekannten Bedien- und Anzeigevorrichtungen liegt der Erfindung die Aufgabe zugrunde, die bekannten Anordnungen unter Beibehaltung der bisherigen Vorteile in der Weise zu verbessern bzw. weiterzuentwickeln, daß eine weitgehende Vereinfachung zum einen der Bedienvorrichtung und zum anderen der räumlich getrennt angeordneten Anzeigevorrichtung erzielt wird und daß zum anderen trotzdem eine einfache, frei wählbare, ein- und ausschaltbare Wiedergabe der Symbole und der. Betätigungen der Bedienvorrichtung gegeben ist, wobei insb. nur eine minimale Ablenkung des Fahrzeugführers gegeben sein soll. Die gewünschte Anordnung soll dabei außerdem einfach und wirtschaftlich herstellbar und gut in der Handhabung sein, weiterhin ist eine einfache Unterbringbarkeit in dem betreffenden Fahrzeug wünschenswert.

Die Aufgabe wird erfindungsgemäß dadurch gelöst, daß die Bedienvorrichtung als Touch-Pad ausgebildet ist und daß die Anzeigevorrichtung zur frei wählbaren, einund ausschaltbaren Wiedergabe des Touch-Pads, seiner Symbole und seiner Betätigungen ausgebildet ist, wobei die Wiedergabe des Touch-Pads auf der Anzeigenvorrichtung zumindest schematisch die Form des Touch-Pads aufweist. Auf diese Weise wird erstmalig mit einfachen Mitteln die Möglichkeit geschaffen, gegenüber den bekannten Ausführungsformen eine weitgehende Vereinfachung zum einen der Bedienvorrichtung und zum anderen der räumlich getrennt angeordneten Anzeigevorrichtung zu erreichen, wobei trotzdem eine einfache, frei wählbare, einund ausschaltbare Wiedergabe der Symbole und der Betätigungen der Bedienvorrichtung auf der Anzeigevorrichtung gegeben ist, die in diesem Falle durch die Wiedergabe des Touch-Pads, seiner Symbole und seiner Betätigungen auf der Anzeigevorrichtung erfolgt. Die Anzeigevorrichtung zeigt dabei die Informationen über die Bedienvorrichtung nur an, wenn sie gewünscht sind. Es kommt dabei nur zu einer minimalen Ablenkung des Fahrzeugführers, weiterhin ist die erfindungsgemäße Anordnung einfach in dem betreffenden Fahrzeug unterzubringen, einfach und wirtschaftlich herstellbar und gut und sicher in der Handhabung.

Bei der bevorzugten Ausführungsform der vorliegenden Erfindung ist die Bedienvorrichtung als n-eckiges Touch-Pad ausgebildet, z. B. als Achteck. Diese Ausführung ist in ergonomischer Hinsicht vorteilhaft und erlaubt eine besonders vorteilhafte Handhabung durch den Fahrzeugführer sowie auch eine vorteilhafte, prägnante Darstellbarkeit auf der Anzeigevorrichtung. Z. B. ist die Bereitstellung von acht Auswahlmöglichkeiten pro Teilmenü für die meisten Anwendungsfälle vollkommen ausreichend.

Bei einer alternativen Ausführungsform der vorliegenden Erfindung ist die Bedienvorrichtung als unregelmäßig berandetes Touch-Pad ausgebildet. Durch bestimmte ertastbare Ausbuchtungen am Rand des Touch-Pads läßt sich die auf der Anzeigevorrichtung gezeigte Wiedergabe des Touch-Pads leichter ertasten. In diesem Falle hat die unregelmäßige Berandung die Aufgabe, die haptische Erkennung zu verbessern. Ein weiterer Vorteil dieser Ausführung besteht darin, daß auf diese Weise das Touch-Pad auch an seine Position im Fahrzeuginnerraum baulich angepaßt werden kann, wenn z. B. der Einbauraum begrenzt ist oder das Touch-Pad auf z. B. einem Schaltknauf oder einem beliebigen anderen Element des Fahrzeuginnenraumes angeordnet ist..

Nach einem weiteren bevorzugten Merkmal der vorliegenden Erfindung ist die Anzeigevorrichtung in der Instrumententafel des Fahrzeuges angeordnet. Um dabei eine möglichst leichte und deutliche Ablesbarkeit durch den Fahrzeugführer zu erreichen, empfiehlt es sich dabei, daß die Anzeigevorrichtung zur frei wählbaren, ein- und ausschaltbaren Wiedergabe des Touch-Pads, seiner Symbole und seiner Betätigungen im zentralen Bereich der Instrumententafel des Fahrzeuges ausgebildet ist.

Zweckmäßig ist es nach einem weiteren Ausgestaltungsmerkmal der vorliegenden Erfindung, daß die Bedienvorrichtung im Griffbereich des Fahrzeugführers angeordnet ist. Dabei ist in bevorzugter Weise vorgesehen, daß die Bedienvorrichtung am Lenkrad des Fahrzeuges, insb. Kraftfahrzeuges, angeordnet ist, so daß der Fahrzeugführer zur Betätigung der Bedienvorrichtung das Lenkrad nicht loszulassen braucht. Es kann dabei die Bedienvorrichtung an der Rückseite des Lenkrades des Fahrzeuges, insb. Kraftfahrzeuges, angeordnet sein, in diesem Fall kann der Fahrzeugführer in einfacher und bequemer Weise die Bedienvorrichtung mit dem Zeigefinger bedienen. Bei einer abgewandelten Ausführungsform kann die Bedienvorrichtung an der Vorderseite des Lenkrades des Fahrzeuges, insb. Kraftfahrzeuges, angeordnet sein.

Bei einer dazu alternativen Ausführungsform der vorliegenden Erfindung ist die Bedienvorrichtung an der Mittelkonsole des Fahrzeuges, insb. Kraftfahrzeuges, angeordnet. In diesem Fall wird die Bedienvorrichtung in an sich bekannter Weise von der Schalthand des Fahrzeugführers betätigt.

Nach einem weiteren Ausgestaltungsmerkmal der vorliegenden Erfindung umfaßt die Bedienvorrichtung im Bereich außerhalb des Touch-Pads zusätzliche Betätigungselemente zum Scrollen, d. h. ein Verschieben der angezeigten Symbole auf der Anzeigevorrichtung, und/ oder für eine Bestätigungseingabe. Dadurch wird die Bedienung dieser Bedienvorrichtung und damit die Auswahl der Teilmenüs noch zusätzlich unterstützt bzw. erleichtert. Es empfiehlt sich dabei nach einem letzten Merkmal der vorliegenden Erfindung, daß die Anzeigevorrichtung zur Wiedergabe dieser im Bereich außerhalb des ausgebildeten Touch-Pad angeordneten zusätzlichen Betätigungselemente ausgebildet ist, damit auch deren Zustand bzw. Betätigungen vom Fahrzeugführer kontrolliert werden können.

Die Erfindung ist in den Figuren der Zeichnung in einem Ausführungsbeispiel dargestellt. Es zeigen:
- Fig. 1: eine schematische Darstellung einer Instrumententafel eines Fahrzeuges mit einer eingebauten erfindungsgemäßen Bedien- und Anzeigevorrichtung bei ausgeschalteter Anzeigevorrichtung,
- Fig. 2: die schematische Darstellung der Instrumententafel gemäß Fig. 1 bei eingeschalteter Anzeigevorrichtung,
- Fig.3: eine schematische Darstellung einer als achteckiges Touch- Pad ausgebildeten Bedienvorrichtung der erfindungsgemäßen Bedien- und Anzeigevorrichtung,
- Fig.4: die schematische Darstellung eines auf der Anzeigevorrichtung erscheinenden Auswahlmenüs für die Bedienvorrichtung gemäß Fig. 3,
- Fig. 5: die schematische Darstellung des Teilmenüs "Entertainment" nach Fig. 4 für die Bedienvorrichtung gemäß Fig. 3 mit voreingestellter Funktion "CD- Player",
- Fig. 6: die schematische Darstellung des Teilmenüs "CD- Player" nach Fig. 5 für die Bedienvorrichtung gemäß Fig. 3 mit voreingestellter Funktion "Next",
- Fig. 7: die schematische Darstellung einer zweiten Ebene des Teilmenüs "CD-Player" nach Bestätigen der Funktion "Next" gemäß Fig. 6 mit der Zusatzfunktion "Eject".

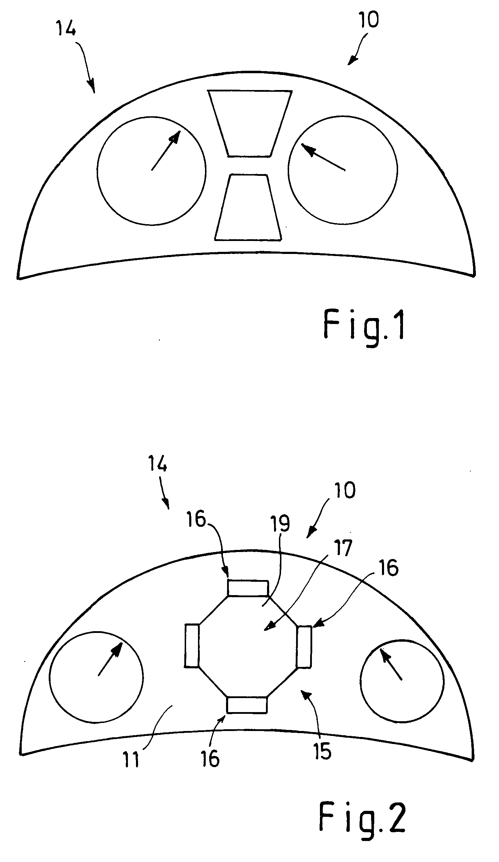

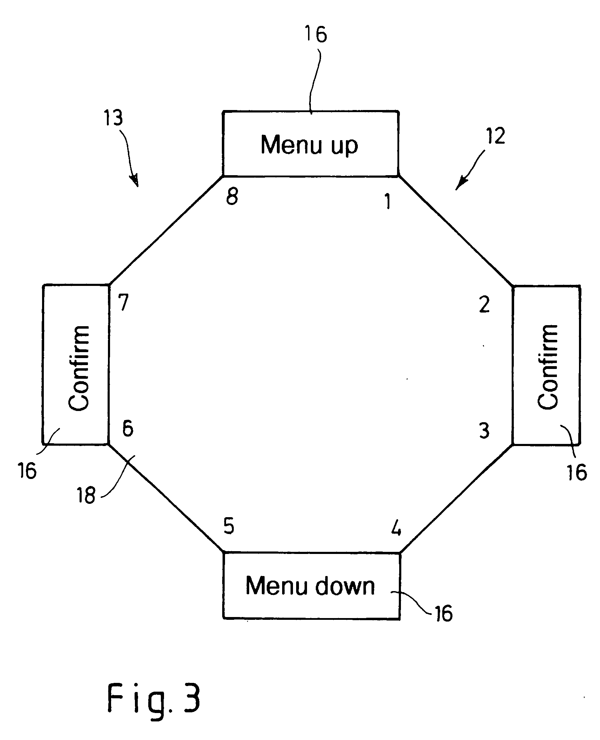

Die erfindungsgemäße Bedien- und Anzeigevorrichtung ist generell mit 10 bezeichnet. Diese Bedien- und Anzeigevorrichtung 10 ist vorgesehen für eine Verwendung in Fahrzeugen, insb. in Kraftfahrzeugen, und dient zur Auswahl eines Teilmenüs aus einem auf einer Anzeigevorrichtung 11 anzeigbaren Menü. Die erfindungsgemäße Bedien- und Anzeigevorrichtung 10 umfäßt eine Anzeigevorrichtung 11 und eine räumlich getrennt von der Anzeigevorrichtung 11 angeordnete Bedienvorrichtung 12, wobei die Bedienvorrichtung 12 separat von der Anzeigevorrichtung 11 betätigbar ausgebildet ist. Es ist dabei die Anzeigevorrichtung 11 zur frei wählbaren, ein- und ausschaltbaren Wiedergabe der Symbole und der Betätigungen der Bedienvorrichtung 11 ausgebildet. In den Fig. 1 und 2 der Zeichnung ist dazu eine mit 14 bezeichnete Instrumententafel eines Fahrzeuges mit einer eingebauten erfindungsgemäßen Bedien- und Anzeigevorrichtung 10 schematisch dargestellt, und zwar in Fig. 1 mit ausgeschalteter und in Fig. 2 mit eingeschalteter Anzeigevorrichtung 11 für die Bedienvorrichtung 12. Die Bedienvorrichtung 12 selbst ist in der Fig. 3 der Zeichnung schematisch in einer Ausführungsform dargestellt. Bei den Darstellungen in den Fig. 1 und 2 sind außerdem, siehe z.B. Fig. 1, übliche Instrumentenanzeigen angedeutet dargestellt, wie z.B. Tachometer- oder Drehzahlmesseranzeige, Anzeigen für Benzin, Temperatur, Kontrollanzeigen od. dgl., die bei eingeschalteter Anzeigevorrichtung 11 für die Bedienvorrichtung 12 teilweise ausgeblendet werden können, siehe hierzu Fig. 2.

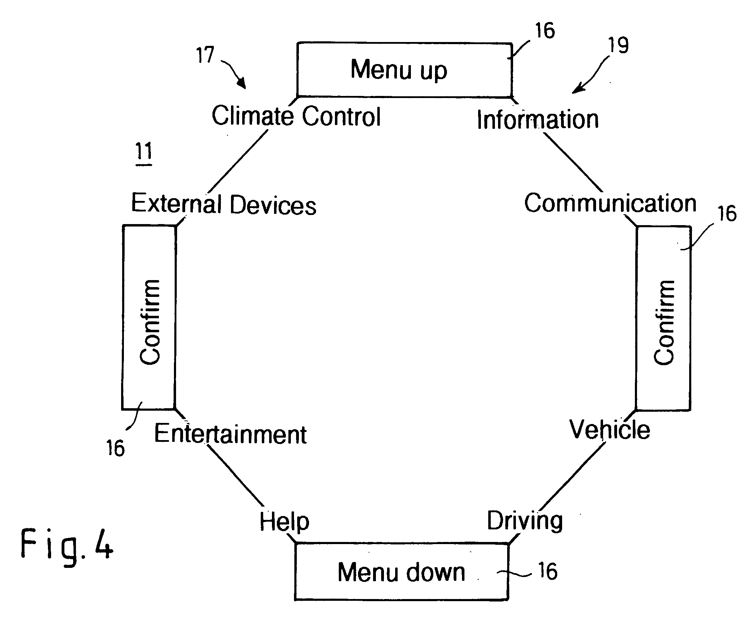

Es ist erfindungsgemäß die Bedienvorrichtung 12 als n- eckig ausgebildetes Touch-Pad 13 ausgebildet und weiterhin ist die Anzeigevorrichtung 11 zur frei wählbaren, ein- und ausschaltbaren Wiedergabe dieses n- eckigen Touch- Pad 13, seiner Symbole und seiner Betätigungen ausgebildet. Bei der in den Fig. der Zeichnung dargestellten Ausführungsform ist die Bedienvorrichtung 12 als achteckiges Touch-Pad 13 ausgebildet, siehe dazu die Fig. 3 der Zeichnung mit der Darstellung der als achteckiges Touch- Pad 13 ausgebildeten Bedienvorrichtung 12 sowie die Darstellungen des achteckigen Touch- Pad 13 auf der Anzeigevorrichtung 11 gemäß den Fig. 4 bis 7 der Zeichnung. Die Bedienvorrichtung 12 kann aber auch eine andersartige Ausgestaltung aufweisen, vorgesehen ist insb. auch die Ausbildung der Bedienvorrichtung 12 als viereckiges Touch- Pad 13. Diese Ausbildung ist z.B. bei Teilmenüs mit nur wenigen Auswahlmöglichkeiten vorteilhaft.

Bei den dargestellten Ausführungsformen der vorliegenden Erfindung ist die Anzeigevorrichtung 11 in der Instrumententafel 14 des Fahrzeuges angeordnet, siehe die Fig. 1 und 2 der Zeichnung. Es ist dazu in Fig. 1 eine Instrumententafel 14 mit ausgeschalteter Anzeigevorrichtung 11 und in Fig. 2 eine Instrumententafel 14 mit eingeschalteter Anzeigevorrichtung 11 dargestellt. Die Anzeigevorrichtung 11 ist dabei, siehe insb. Fig. 2, zur frei wählbaren, ein- und ausschaltbaren Wiedergabe des n- eckigen, hier acheckigen, Touch- Pad 13, seiner Symbole und seiner Betätigungen im zentralen Bereich 15 der Instrumententafel 14 des Fahrzeuges ausgebildet. Es wird dadurch eine leichte und deutliche Ablesbarkeit durch den Fahrzeugführer erreicht. In der Fig. 2 der Zeichnung ist dabei die Abbildung des achteckigen Touch-Pad 13 auf der Anzeigevorrichtung 11 mit 19 bezeichnet, die Menü- Auswahl an sich ist mit 17 bezeichnet.

Es ist erfindungsgemäß vorgesehen, daß die Bedienvorrichtung 12 im Griffbereich des Fahrzeugführers angeordnet ist. Bevorzugt kann dabei die Bedienvorrichtung 12 am Lenkrad des Fahrzeuges, insb. Kraftfahrzeuges, angeordnet sein. Dies ist in den Fig. der Zeichnung nicht dargestellt. Bei dieser Ausführungsform kann die Bedienvorrichtung 12 an der Rückseite des Lenkrades des Fahrzeuges, insb. Kraftfahrzeuges, angeordnet sein. Es kann dann der Fahrzeugführer in einfacher und bequemer Weise die Bedienvorrichtung 12, d.h. das achteckige Touch- Pad 13, mit dem Zeigefinger bedienen. Bei einer anderen Möglichkeit ist vorgesehen, daß die Bedienvorrichtung 12 an der Vorderseite des Lenkrades des Fahrzeuges, insb. Kraftfahrzeuges, angeordnet ist.

Bei einer dazu alternativen Ausführungsform der vorliegenden Erfindung ist vorgesehen, daß die Bedienvorrichtung 12 an der hier nicht dargestellten Mittelkonsole des Fahrzeuges, insb. Kraftfahrzeuges, angeordnet ist.

Die Bedienvorrichtung 12 der erfindungsgemäßen Anordnung umfaßt, siehe insb. die Fig. 3, im Bereich außerhalb des n- eckig, hier achteckig, ausgebildeten Touch- Pad 13 zusätzliche Betätigungselemente 16 zum Scrollen der Anzeigevorrichtung 11 und/oder für eine Bestätigungseingabe. Die Betätigungselemente 16 zum Scrollen der Anzeigevorrichtung 11 sind dabei mit "Menu up" und "Menu down" und die für eine Bestätigungseingabe jeweils mit "Confirm" bezeichnet. Dabei ist, siehe die Darstellungen in den Fig. 4 bis 7, die Anzeigevorrichtung 11 zur Wiedergabe der im Bereich außerhalb des n- eckig, hier achteckig, ausgebildeten Touch- Pad 13 angeordneten zusätzlichen Betätigungselemente 16 ausgebildet.

Mit der erfindungsgemäßen Anordnung wird erstmalig gegenüber den bekannten Ausführungformen eine weitgehende Vereinfachung zum einen der Bedienvorrichtung 12 und zum anderen der räumlich getrennt angeordneten Anzeigevorrichtung 11 erreicht, wobei trotzdem eine einfache, frei wählbare, ein- und ausschaltbare Wiedergabe der Symbole und der Betätigungen der Bedienvorrichtung 12 auf der Anzeigevorrichtung 11 gegeben ist, die in diesem Falle durch die Wiedergabe des achteckigen Touch- Pad 13, seiner Symbole und seiner Betätigungen auf der Anzeigevorrichtung 11 erfolgt. Die Anzeigevorrichtung 11 zeigt dabei die Informatonen über die Bedienvorrichtung 12 nur an, wenn sie gewünscht sind, wobei es dabei nur zu einer minimalen Ablenkung des Fahrzeugführers kommt.

Weiterhin ist die erfindungsgemäße Anordnung einfach in dem betreffenden Fahrzeug unterzubringen, einfach und wirtschaftlich herstellbar und gut und sicher in der Handhabung. Bzgl. der Anbringung der erfindungsgemäßen Anordnung ist insb. die Möglichkeit zur separaten Anbringung von Anzeigevorrichtung 11 und Bedienvorrichtung 12 von Vorteil. Es kann dabei die Anbringung der Anzeigevorrichtung 11 in einer für den Fahrzeugführer gut geeigneten Umgebung erfolgen, um so dessen Ablenkung zu minimieren. Dabei steht über die in der Instrumententafel 14 konfigurierbare Anzeige die Information nur dann zur Verfügung, wenn sie gewünscht wird, siehe z.B. Fig. 2. Wird die Information nicht gewünscht, ist die Anzeige nicht zu sehen, siehe Fig. 1.

Bei der in Fig. 3 dargestellten Bedienvorrichtung 12 der erfindungsgemäßen Anordnung kann die jeweilige Position auf dem achteckigen Touch- Pad 13 über die Finger des Fahrzeugführers festgestellt werden, was in diesem Fall über die Ecken "1" bis "8" des achteckigen Touch- Pad 13 erfolgt. Für ein Scrollen der Anzeige und eine Bestätigungseingabe sind dabei außerhalb des Touch- Pad 13 liegende zusätzliche Betätigungselemente 16 vorgesehen, die hier mit "Menu up", "Menu down" und "Confirm" bezeichnet sind. Für diese Bedienvorrichtung 12 ergibt sich eine direkte Kontrollierbarkeit auf der Anzeigevorrichtung 11, siehe die Darstellungen gemäß den Fig. 4 bis 7, es werden dabei auf der Anzeige bestimmte zuvor ausgewählte Auswahlmöglichkeiten angezeigt.

Die Anzeigevorrichtung 11 gibt, siehe wieder die Fig. 4 bis 7, das achteckige Touch-Pad 13 mit den Symbolen für die Auswahlmöglichkeiten für die Teilmenüs und deren Betätigungen wieder, sowie die zusätzlichen Betätigungselemente 16. Weiterhin ist für eine verständliche Menüführung jeweils ein hier nicht bezeichnetes Feld " Press Confirm" vorgesehen. Die Position auf der bei Bedarf frei wählbar ein- und auschaltbaren Anzeige entspricht dabei der Position des Fingers auf dem Touch-Pad 13.

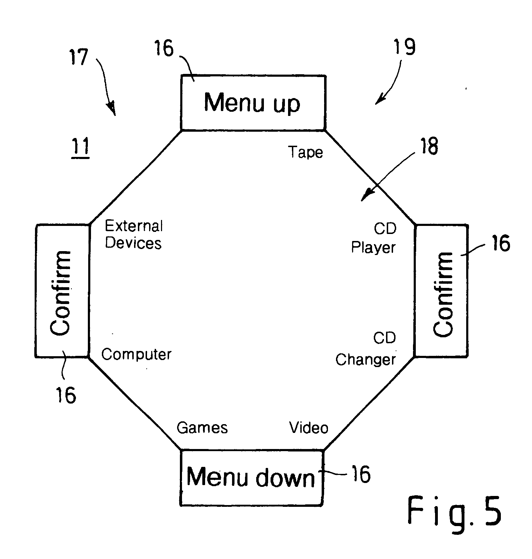

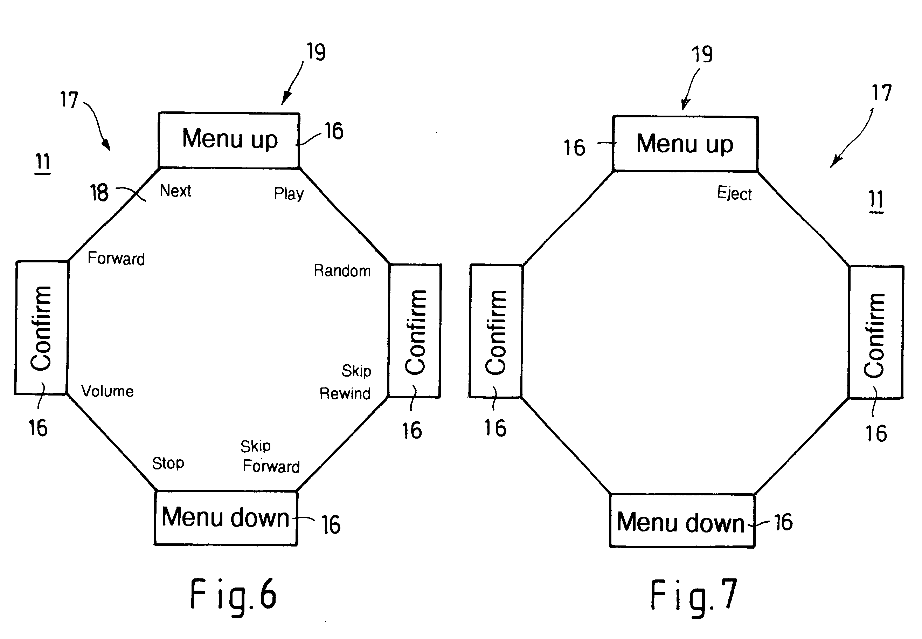

In der Fig. 4 ist das auf der Anzeigevorrichtung 11 ersichtliche Auswahlmenü mit acht zur Verfügung stehenden Auswahlmöglichkeiten dargestellt. Die Abbildung des Touch- Pad 13 auf der Anzeigevorrichtung 11 ist dabei wieder mit 19 und die Menü-Auswahl mit 17 bezeichnet. In der Fig. 5 ist das Auswahlmenü "Entertainment" dargestellt, wobei hier durch die Position des Fingers das Teilmenü "CD- Player" voreingestellt ist. In diesem Fall sind sieben Auswahlmöglichkeiten gegeben. In Fig. 6 ist das Auswahlmenü "CD-Player" dargestellt, in diesem Fall ist durch die Position des Fingers das Teilmenü "Next" aus hier acht Auswahlmöglichkeiten voreingestellt. In Fig. 7 ist die zweite Ebene des Auswahlmenüs "CD- Player" dargestellt, die sich nach Bestätigen der Funktion "Next" in Fig. 6 ergibt. Diese zweite Ebene enthält lediglich die Auswahlmöglichkeit "Eject".

Durch die Trennung von Anzeigevorrichtung 11 und Bedienvorrichtung 12 besteht bei der erfindungsgemäßen Anordnung die Möglichkeit, die Bedienvorrichtung 12 an beliebiger Stelle im Fahrzeug anzubringen. Die Menüführung der Anzeigevorrichtung 11 kann hinsichtlich ihrer verschiedenen Ebenen an den Bedarf angepaßt werden, siehe z.B. die Fig. 7, in diesem Falle waren mehr als acht Auswahlmöglichkeiten für das Auswahlmenü "CD-Player" vorzusehen. Die Anzeigevorrichtung 11 mit der Wiedergabe des Touch- Pad 13 etc. gibt dem Fahrzeugführer die Möglichkeit einer ständigen Augenkontrolle der Bedienvorrichtung 12, wobei durch die in der Instrumententafel 14 konfigurierbare Anzeige eine nur minimale Ablenkung des Fahrzeugführers gegeben ist, ähnlich wie bei einem Head Up Display. Durch eine geeignete Menüführung bzw. den hier gegebenen unterschiedlichen Möglichkeiten zur Gestaltung derselben kann außerdem eine niedrige Anzahl von Bildschirmmerkmalen erzielt werden, was sich positiv auf die Anbringung der erfindungsgemäßen Anordnung, sowie der Technik und Integrierbarkeit der Anzeigevorrichtung 11 auswirkt. Die erfindungsgemäße Anordnung hat außerdem den Vorteil, daß sie für neue, bisher nicht bekannte Funktionen oder Bedürfnisse angepaßt werden kann, ferner wird durch sie eine Minimierung der erforderlichen Bedienelemente erzielt.

Wie bereits erwähnt, sind die dargestellten Ausführungsformen nur beispielsweise Verwirklichungen der Erfindung, diese ist nicht darauf beschränkt, es sind vielmehr. noch mancherlei Abänderungen und Ausbildungen möglich. So kann insb. die Anzeigevorrichtung 11 eine von der dargestellten Ausführungsform abweichende Ausgestaltung aufweisen, weiterhin vorgesehen sind wie erwähnt Abweichungen in der Ausbildung der als n- eckig ausgebildeten Touch- Pad 13 ausbildeten Bedienvorrichtung 12.

## Patentansprüche

1. Bedien- und Anzeigevorrichtung (10) in Fahrzeugen, insb. in Kraftfahrzeugen, zur Auswahl eines Teilmenüs aus einem auf einer Anzeigevorrichtung (11) anzeigbaren Menü, umfassend eine Anzeigevorrichtung (11) und eine räumlich getrennt von der Anzeigevorrichtung (11) angeordnete Bedienvorrichtung (12), wobei die Bedienvorrichtung (12) separat von der Anzeigevorrichtung (11) betätigbar ausgebildet ist und wobei die Anzeigevorrichtung (11) zur frei wählbaren, ein- und ausschaltbaren Wiedergabe der Symbole und der Betätigungen der Bedienvorrichtung (11) ausgebildet ist,
**dadurch gekennzeichnet, daß**
die Bedienvorrichtung (12) als Touch-Pad (13) ausgebildet ist und daß die Anzeigevorrichtung (11) zur frei wählbaren, ein- und ausschaltbaren Wiedergabe des Touch-Pads (13), seiner Symbole und seiner Betätigungen ausgebildet ist, wobei die Wiedergabe des Touch-Pads (13) auf der Anzeigenvorrichtung (11) zumindest schematisch die Form des Touch-Pads (13) aufweist.

2. Bedien- und Anzeigevorrichtung nach Anspruch 1,
**dadurch gekennzeichnet, daß**
die Bedienvorrichtung (12) als n-eckiges Touch- Pad (13) ausgebildet ist.

3. Bedien- und Anzeigevorrichtung nach Anspruch 1,
**dadurch gekennzeichnet, daß**
die Bedienvorrichtung (12) als unregelmäßig berandetes Touch- Pad (13) ausgebildet ist.

4. Bedien- und Anzeigevorrichtung nach einem der Ansprüche 1 bis 3,
**dadurch gekennzeichnet, daß**
die Anzeigevorrichtung (11) in der Instrumententafel (14) des Fahrzeuges angeordnet ist.

5. Bedien- und Anzeigevorrichtung nach Anspruch 4,
**dadurch gekennzeichnet, daß**
die Anzeigevorrichtung (11) zur frei wählbaren, ein- und ausschaltbaren Wiedergabe des Touch- Pad (13), seiner Symbole und seiner Betätigungen im zentralen Bereich (15) der Instrumententafel (14) des Fahrzeuges ausgebildet ist.

6. Bedien- und Anzeigevorrichtung nach einem der Ansprüche 1 bis 5,
**dadurch gekennzeichnet, daß**
die Bedienvorrichtung (12) im Griffbereich des Fahrzeugführers angeordnet ist.

7. Bedien- und Anzeigevorrichtung nach Anspruch 6,
**dadurch gekennzeichnet, daß**
die Bedienvorrichtung (12) am Lenkrad des Fahrzeuges, insb. Kraftfahrzeuges, angeordnet ist.

8. Bedien- und Anzeigevorrichtung nach Anspruch 7,
**dadurch gekennzeichnet, daß**
die Bedienvorrichtung (12) an der Rückseite des Lenkrades des Fahrzeuges, insb. Kraftfahrzeuges, angeordnet ist.

9. Bedien- und Anzeigevorrichtung nach Anspruch 7,
**dadurch gekennzeichnet, daß**
die Bedienvorrichtung (12) an der Vorderseite des Lenkrades des Fahrzeuges, insb. Kraftfahrzeuges, angeordnet ist.

10. Bedien- und Anzeigevorrichtung nach einem der Ansprüche 1 bis 6,
**dadurch gekennzeichnet, daß**
die Bedienvorrichtung (12) an der Mittelkonsole des Fahrzeuges, insb. Kraftfahrzeuges, angeordnet ist.

11. Bedien- und Anzeigevorrichtung nach einem der Ansprüche 1 bis 10,
**dadurch gekennzeichnet, daß**
die Bedienvorrichtung (12) im Bereich außerhalb Touch-Pads (13) zusätzliche Betätigungselemente (16) zum Scrollen der Anzeigevorrichtung (11) und/ oder für eine Bestätigungseingabe umfaßt.

12. Bedien- und Anzeigevorrichtung nach Anspruch 11,
**dadurch gekennzeichnet, daß**
die Anzeigevorrichtung (11) zur Wiedergabe der im Bereich Touch-Pads (13) angeordneten zusätzlichen Betätigungselemente (16) ausgebildet ist.
